# EUROPEAN PATENT APPLICATION

(11) **EP 1 811 754 A1**
(43) Date of publication of application: **25.07.2007**
(21) Application number: 06100498.2
(22) Date of filing: 18.01.2006
(51) Int. Cl.: H04M 1/725

(54) **Communications mobile device with detachable user interface unit**

(71) Applicant: Research In Motion Limited, Waterloo, Ontario N2L 3W8 (CA)
(72) Inventor: Moosavi, Vahid, Kitchener Ontario N2R 1K6 (CA); Fard, Somayeh Geraee Naezhad, Kitchener Ontario N2R 1K6 (CA)
(74) Representative: Rickard, David John

(57) **Abstract**

A component-based mobile device includes a server component for performing voice and data communication functions and a user interface (UI) unit for performing input/output functions. The server component is a larger unit with a larger server battery and more processing power and includes a engagement portion. The UI unit has a smaller UI battery and less processing power and is designed to fit within or removably attach to the engagement portion. The server battery may charge the UI battery when the UI unit is in the engagement portion. The server component and the UI unit may communicate wirelessly when the UI unit is out of the engagement portion and via a wired connection when the UI unit is in the engagement portion. The server component and the UI unit may be paired for encrypted wireless communication during the manufacturing process.

## Description

This application relates to a component-based mobile device having a server unit and a user interface unit.

In recent years, mobile devices have been used for many different functions, from mobile phones to personal organizers to portable music players. Recent trends have seen the consolidation of these devices into a single unit. This additional functionality comes at a cost of the mobile unit either requiring a larger battery or needing to be recharged more frequently. For example, including a phone together with a PDA means that the PDA must have a larger battery to allow for the additional power demands of having the phone function on standby and during voice calls. Further, added functionality will generally require that the mobile device have larger data storage and/or data storage expandability (i.e. memory card slots or the like). These requirements generally result in a mobile device that is more difficult to carry around and more difficult to hold in the hand and manipulate easily.

At the same time that the consolidation of functionality has been taking place, there have been developments in personal area networks (PANs). A PAN is a network that allows a number of devices in a small area to communicate with each other. For example, a wireless earphone/microphone can communicate with a mobile phone in a user's pocket or a digital camera can communicate wirelessly with the mobile phone to send a picture to a friend. These PANs often involve making use of the Bluetooth^{™} system. This has resulted in the potential for an individual to carry around a greater number of accessories in conjunction with their mobile device. As in the example above, if the mobile phone does not have a camera (in order to reduce its size) the user may carry around a camera separately and use a PAN to link the two together. The implementation of PANs can create issues related to security and the setting up of appropriate secure communication channels between devices/ accessories on the PAN to ensure that privacy is not breached by hackers or the like.

There is therefore a need in the industry for novel systems or methods that provide mobile devices that have enhanced functionality but that are easier for a user to carry around and/or manipulate and that have an improved battery life.

According to an exemplary embodiment, there is preferably provided a component-based mobile device including: a server component comprising a server unit for performing voice and data communication functions, and an engagement portion; and a physically separate user interface (UI) unit for performing input/output functions, which is in communication with the server unit and configured to releasably engage with the engagement portion. In a mobile device, the division of the communications functions from the input/output functions allows the more power and RF intensive communication functions to be performed by a server component, which may be clipped to a user's belt or in bag away from the user's head, and the less power intensive input/output functions to be performed by a UI unit, which may be held in the user's hand.

In a particular case, the server component may further include a server battery and the UI unit may further include a UI battery and the mobile device may be configured such that the server battery charges the UI battery when the UI unit is in the engagement portion. This configuration allows the UI battery to be smaller than conventional mobile devices because it is not necessary to find an electrical outlet to recharge the UI unit.

In another particular case, the engagement portion may include a holster into which the UI unit may be slidably inserted and removed.

In another particular case, the server unit further may include a server communications subsystem and the UI unit includes a UI communications subsystem and the server unit and the UI unit are in wireless communication via the communications subsystems. In this case, the server unit and the UI unit may be manufactured such that they are paired for encrypted wireless communications. Alternatively or, in addition, the server unit may further include a server connector and the UI unit may include a UI connector such that the server unit and the UI unit are in wired communication via the connectors when the UI unit is in the engagement portion. In particular, the server unit and the UI unit may be configured to only exchange encryption keys when in wired communication.

According to another exemplary embodiment, there is preferably provided a component-based mobile device including: a server component comprising a server battery and an engagement portion; and a physically separate user interface (UI) unit, which is configured to releasably engage with the engagement portion, and which includes a UI battery, wherein the server battery and the UI battery are configured such that the server battery charges the UI battery when the UI unit is in the engagement portion. Providing a configuration in which the server battery can recharge the UI battery allows the server component to have a larger, heavier server battery, which may be clipped to a user's belt or placed in a bag, while the UI unit can have a smaller, lighter UI battery, which may be recharged from the server battery.

In a particular case, the server unit may further include a server communications subsystem and the UI unit may further include a UI communications subsystem such that the server unit and the UI unit are in wireless communication via the server and UI communications subsystems. In this case, the server unit and the UI unit may be manufactured such that they are paired for encrypted wireless communications. Alternatively, or in addition, the server unit may further include a server connector and the UI unit may further include a UI connector and the server unit and the UI unit are configured to be in wired communication via the server and UI connectors when the UI unit is in the engagement portion. In particular, the server unit and the UI unit may be configured to only exchange encryption keys when in wired communication.

According to yet another exemplary embodiment, there is preferably provided a component-based mobile device including: a server component and a UI unit. The server component includes: a server unit for performing processing and communication functions; a server battery connected with the server unit; an engagement portion attached to at least one of the server unit and the server battery; and a charging system connected to the server unit and the server battery. The user interface (UI) unit is for performing input/output functions and is in communication with the server unit and configured to releasably engage with the engagement portion. The UI unit includes a UI battery, wherein the charging system is arranged in relation to the engagement portion such that the UI battery is charged by the server battery when the UI unit is in the engagement portion.

In a particular case, the server unit may further include a server communications subsystem and the UI unit may further include a UI communications subsystem and the server unit and the UI unit are in wireless communication via the server and UI communications subsystems. In this case, the server unit and the UI unit may be manufactured such that they are paired for encrypted wireless communications. Alternatively, or in addition, the server unit may further include a server connector and the UI unit may further include a UI connector and the server unit and the UI unit are in wired communication via the connectors when the UI unit is in the engagement portion. In particular, the server unit and the UI unit may be configured to only exchange encryption keys when in wired communication.

### Brief Description of the Drawings

For a better understanding of the embodiments described herein and to show more clearly how they may be carried into effect, reference will now be made, by way of example only, to the accompanying drawings which show the exemplary embodiments and in which:
FIG. 1 is a perspective view of an exemplary embodiment of a mobile communication device;
FIG. 2 is a perspective view of an exemplary embodiment of a server component of the mobile communication device of FIG. 1;
FIG. 3A is a perspective view of an exemplary embodiment of a user interface (UI) unit of the mobile communication device of FIG. 1 in a closed position;
FIG. 3B is a perspective view of the UI unit of FIG. 3A in an open position;
FIG. 4 is a block diagram of exemplary components of the server component of FIG. 2;
FIG. 5 is a block diagram of exemplary components of the UI unit of FIG. 3;
FIG. 6 is a block diagram of an exemplary embodiment of a communication subsystem component of the mobile communication device of FIG. 1; and
FIG. 7 is a block diagram of an exemplary embodiment of a node of a wireless network with which the mobile communication device of FIG. 1 may communicate.

### Description of Preferred Embodiments

It will be appreciated that for simplicity and clarity of illustration, where considered appropriate, reference numerals may be repeated among the figures to indicate corresponding or analogous elements or steps. In addition, numerous specific details are set forth in order to provide a thorough understanding of the exemplary embodiments described herein. However, it will be understood by those of ordinary skill in the art that the embodiments described herein may be practiced without these specific details. In other instances, well-known methods, procedures and components have not been described in detail so as not to obscure the embodiments described herein. Furthermore, this description is not to be considered as limiting the scope of the embodiments described herein in any way, but rather as merely describing the implementation of the various embodiments described herein.

Some of the embodiments make use of a mobile communication device, sometimes referred to herein as a mobile device, that is a two-way communication device with advanced data communication capabilities having the capability to communicate in a wireless or wired fashion with other computing devices. The mobile device may also include the capability for voice communications. Depending on the functionality provided by the mobile device, it may be referred to as a data messaging device, a cellular telephone with data messaging capabilities, a wireless Internet appliance, or a data communication device (with or without telephony capabilities). Examples of mobile communication devices include cellular phones, cellular smart-phones, wireless organizers, personal digital assistants, handheld wireless communication devices, wirelessly enabled notebook computers and the like. Typically, the mobile device communicates with other devices through a network of transceiver stations. The mobile device may also include the capability to communicate wirelessly with other mobile devices or with accessory devices using personal area networking (PAN) technologies such as infrared, Bluetooth, or the like.

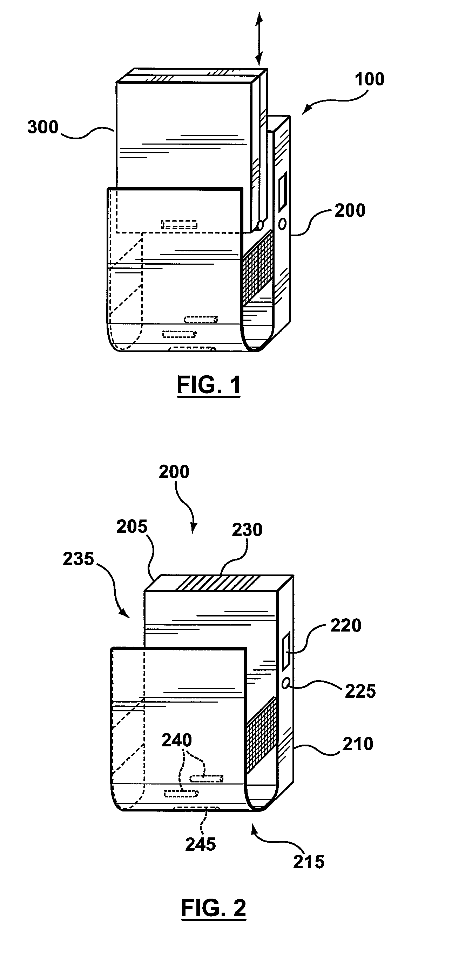

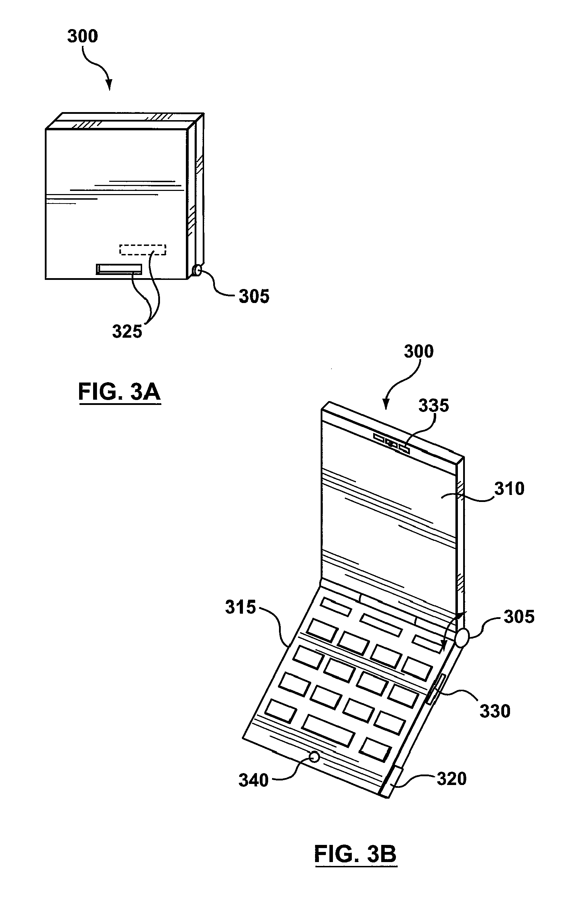

FIG. 1 shows an exemplary embodiment of a mobile device 100. The mobile device 100 includes a mobile server component 200 (shown in more detail in FIG. 2) and a mobile user interface (UI) unit 300 (shown in more detail in FIGS. 3A and 3B). The UI unit 300 is designed such that it may be removably engaged with the server component 200. In this example embodiment, the UI unit 300 is designed to be inserted into or pulled out of the server component 200 as shown by the arrow A.

Referring to FIG. 2, the server component 200 includes a mobile server unit 205, a battery pack 210, and an engagement portion 215. In this embodiment, the server unit 205, the battery pack 210 and holster unit 215 are shown generally integrated into one body. The server unit 205 is described in further detail below but, generally speaking, may include external input/output connections or devices such as a data port 220, an audio port 225 or a speaker 230. The battery pack 210 (which may be a single battery or a plurality of batteries or battery cells or the like) provides power to the server unit 205 and, in some cases, may also be used to recharge the UI unit 300. The server component 200 is preferably designed to be attached to a user's belt, placed in a user's bag or attached to a part of the user's body, such as an ankle, wrist or the like by some means of attachment (not shown) as will be known to those of skill in the art. As such, the battery pack 210 can be larger than a battery pack that would be typical for a mobile device that is designed to be small enough to be carried or held in a user's hand. In this example embodiment, the engagement portion 215 extends from the base of the battery pack 210 to provide an opening 235 between the engagement portion 215 and the server unit 205 that is configured such that the UI unit 300 can be inserted into and pulled out of the opening 235 (i.e. the UI unit 300 can be inserted into and pulled out of the engagement portion 215). Thus, the engagement portion 215 acts as a "holster" into which the UI unit 300 can be placed when not in use. Alternatively, the engagement portion 215 may be configured such that the UI unit 300 (or a case therefor) clips, fastens, interconnects or otherwise engages with the engagement portion 215. As a simple example, the UI unit 300 (or a case therefor) may include a hook (not shown) which engages with and possibly releasably locks into a socket (not shown) as the engagement portion 215 of the server component 200.

In some embodiments, the server unit 205 may include server contacts 240 that allow the UI unit 300 to be charged by the server battery pack 210 when the UI unit 300 is engaged with the engagement portion 215. In this example embodiment, the server contacts 240 are positioned on the engagement portion 215 at a lower portion thereof. The server unit 205 may further include a server connector 245 that provides a wired connection between the server unit 205 and the UI unit 300 when the UI unit 300 is in the engagement portion 215. Again, in this example embodiment, the server connector 245 is positioned on the engagement portion 215. It will be understood that, in alternate embodiments the server contacts 240 and the server connector 245 may be integrated into a single connector (not shown) that allows transfer of data and power, such as a USB connector or the like. One of skill in the art will understand that the engagement portion 215 may be configured to also accept other devices/accessories in addition to the UI unit 300. For example, the engagement portion 215 may also include space or a clip for a camera component or an earphone component or the like.

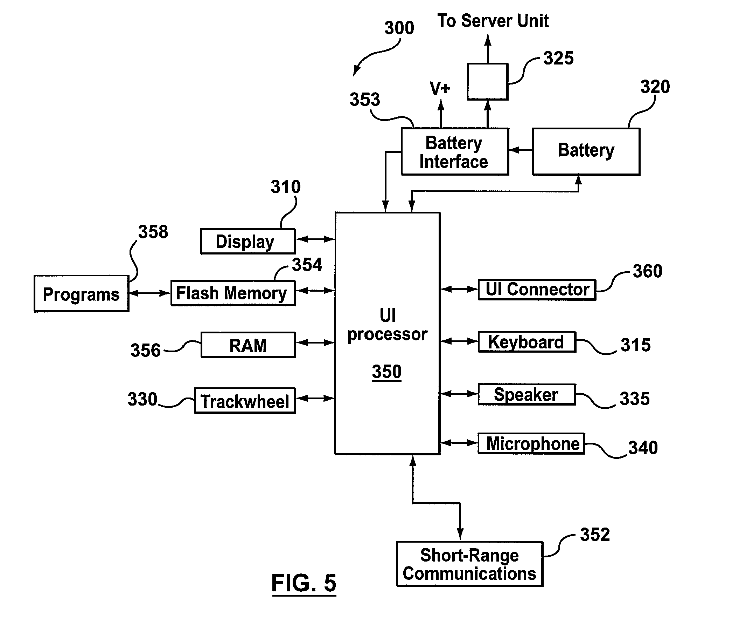

Referring to FIGS. 3A and 3B, the UI unit 300 of this embodiment is designed to fold at a pivot point 305, similar to known mobile phones, and includes a display 310 and a keyboard 315 on internal surfaces thereof. The UI unit 300 also includes a low power UI battery pack 320. In some embodiments, the UI unit 300 may include UI contacts 325 positioned so that the UI contacts 325 will come into contact with the server contacts 240 of the engagement portion 215 described above when the UI unit 300 is in the engagement portion 215 and the UI battery pack 320 will be charged by the server battery pack 210. The UI unit 300 may further include a UI connector 360 (not shown in FIG. 3 but shown in FIG. 5) that is positioned to connect to the server connector 245 of the engagement portion 215 described above and provides a wired connection between the UI unit 300 and server unit 205 when the UI unit 300 is in the engagement portion 215. It will be understood that the placement and configuration of the server contacts 240, UI contacts 325, server connector 245 and UI connector 360 may be varied depending on the design requirements of the server component 200 and the UI unit 300. As described above, in an alternate embodiment, the UI contacts 325 and the UI connector 360 may be combined into a single connector. As shown in FIG. 3B, the UI unit 300 may also include additional input/output devices, such as a track wheel 330, a speaker 335, and a microphone 340.

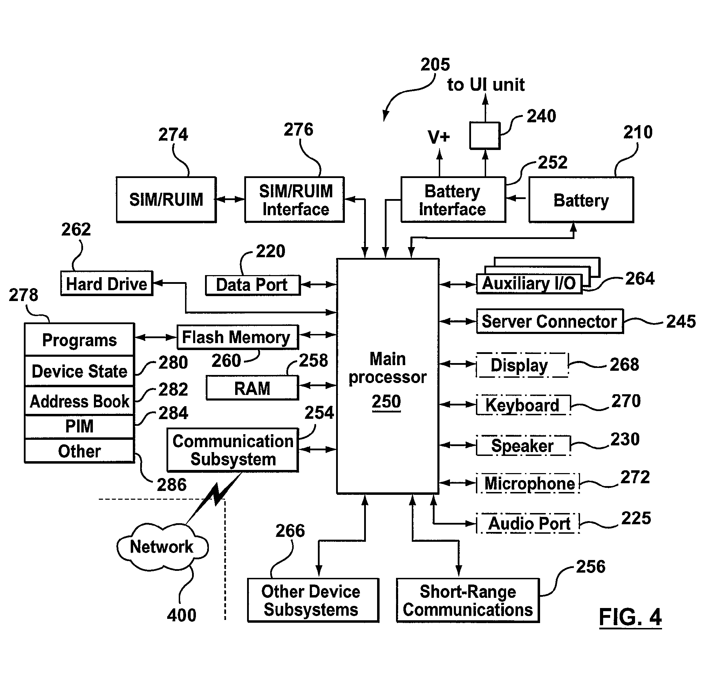

FIGS. 4 and 5 show schematic block diagrams of exemplary components/functions of the server unit 205/server battery pack 210 and the UI unit 300, respectively. For simplicity, the engagement portion 215 is not shown in FIG. 4. Generally speaking, the server component 200 provides data storage, data processing and communication transmission and reception functions while the UI unit 300 provides user interface related functions (with input/output components such as speaker, microphone, keypad, track wheel/ball, keypad, LCD, LED, etc).

When the UI unit 300 is engaged with the engagement portion 215 of the server component 200, there is a wired connection between the UI connector 360 of the UI unit 300 and the server connector 245 of the server unit 205. When the UI unit 300 is not engaged with the engagement portion 215, the UI unit 300 and the server unit 205 communicate wirelessly, using low-power communication subsystems (described below with reference to FIGS. 4 and 5). The server component 200 is typically worn on a user's belt while the UI unit 300 can be engaged with the engagement portion 215 or held in the user's hand. The UI unit 300 may even be designed to be light enough that the UI unit 300 can be configured as a wireless headset worn on the user's head or ear.

As shown in FIG. 4, the server unit 205 includes a main processor 250, which controls the overall operation of the mobile device 100 and is connected to other components and subsystems of the server unit 205.

The main processor 250 interacts with the data port 220, audio port 225, speaker 230, and server connector 245 of FIG. 2 as well as other components and subsystems, including a battery interface 252 (connected to the server battery pack 210 and, via the server contacts 240, to the UI unit 300), a communication subsystem 254, a server short-range communication subsystem 256, a Random Access Memory (RAM) 258, a flash memory 260, a hard drive 262, an auxiliary input/output (I/O) subsystem 264, and other device subsystems 266. It will be understood that components such as the audio port 225, the speaker 230 and the auxiliary input/output subsystem 264 may be optional on the server unit 205 because input/output functions will generally be provided by the UI unit 300. The server unit 205 may also optionally include one or more of a display 268, a keyboard 270, a microphone 272, and other input/output devices (not shown). These optional systems may be provided, for example, as back-up systems if the UI unit 300 is not available.

The data port 220 enables a subscriber to set preferences through an external device or software application and extends the capabilities of the mobile device 100 by providing for information or software downloads to the mobile device 100 other than through a wireless communication network. The alternate download path may, for example, be used to load an encryption key onto the mobile device 100 through a direct and thus reliable and trusted connection to provide secure device communication. The data port 220 may be any suitable port that enables data communication between the mobile device 100 and another computing device. The data port may be a serial or a parallel port. In some instances, the data port 220 may be a USB port that includes data lines for data transfer and a supply line that can provide a charging current to charge the mobile device 100.

In a similar way, the server connector 245 allows for a direct, wired connection between the server unit 205 and the UI connector 360 on the UI unit 300 when the UI unit is in the engagement portion 215. A direct, wired connection provides for a more secure path to transfer data or programs between the server unit 205 and the UI unit 300.

As described above, the server battery pack 210 provides power to the server unit 205. The server battery pack 210 is controlled by the battery interface 252 to appropriately manage the use of power from the server battery pack 210. The battery interface 252 is also connected to the server contacts 240 to facilitate recharging of the UI battery pack 320 when the UI unit 300 is in the engagement portion 215. As described above, the server battery pack 210 is designed to be more powerful than a conventional battery in, for example, a mobile phone, so that the server battery pack 210 will have a longer time between chargings and optionally charge the UI battery pack 320 when the UI unit 110 is in the engagement portion 215 of the server component 200. It is anticipated that the UI battery pack 320 will be a smaller battery than the server battery pack 210 so that the UI unit 300 can be made lighter and have a better form-factor.

The communication subsystem 254 provides communication functions, including data and voice communications. The communication subsystem 254 receives messages from and sends messages to an external wireless network 400. In some implementations of the mobile device 100, the communication subsystem 254 is configured in accordance with the Global System for Mobile Communication (GSM) and General Packet Radio Services (GPRS) standards. The GSM/GPRS wireless network is used worldwide. Other standards that can be used include the Enhanced Data GSM Environment (EDGE), Universal Mobile Telecommunications Service (UMTS), Code Division Multiple Access (CDMA), and Intelligent Digital Enhanced Network (iDEN^{™}) standards. New standards are still being defined, but it is believed that they will have similarities to the network behavior described herein, and it will be understood by persons skilled in the art that the embodiments described herein can use any other suitable standards that are developed in the future. The wireless link connecting the communication subsystem 254 with the wireless network 400 represents one or more different Radio Frequency (RF) channels, operating according to defined protocols specified for GSM/GPRS communications. With newer network protocols, these channels are capable of supporting both circuit switched voice communications and packet switched data communications.

The server short-range communications subsystem 256 is primarily for communications between the server unit 205 and the UI unit 300 but also provides for communication between the server unit 205 or UI unit 300 and other mobile devices, computer systems or accessory devices, without the use of the wireless network 400. For example, the server short-range communications subsystem 256 can include a wireless transmitter/receiver and associated circuits and components for short-range communication. Examples of short-range communication standards include those developed by the Infrared Data Association (IrDA), Bluetooth, and the 802.11 family of standards developed by IEEE. These short-range communication standards allow the formation of wireless connections between or among mobile devices and accessory devices and, in some cases, allow the formation of personal area networks (PANs) involving several devices.

Operating system software and device or application software used by the main processor 250 is typically stored in a persistent store such as the flash memory 260 or hard drive 262. It will be understood that the flash memory 260 or the hard drive 262 may be fixed or removable or some combination thereof. Alternatively, some operating system software can be stored on a read-only memory (ROM) or similar storage element (not shown). Those skilled in the art will appreciate that the operating system, specific device applications, or parts thereof, can be temporarily loaded into a volatile store such as the RAM 258.

The main processor 250, in addition to its operating system functions, enables execution of software applications 278 on the server unit 205. The subset of software applications 278 that control basic device operations, including data and voice communication applications, will generally be installed on the server unit 205 during its manufacture. These programs 278 can include an e-mail program, a web browser, an attachment viewer, and the like.

The server unit 205 further includes software and memory related to a device state module 280, an address book 282, a Personal Information Manager (PIM) 284, and other modules 286. The device state module 280 can provide persistence, i.e. the device state module 280 ensures that important device data is stored in persistent memory, such as the flash memory 260, so that the data is not lost when the server unit is turned off or loses power. The address book 282 can provide information for a list of contacts for the user. For a given contact in the address book 282, the information can include the name, phone number, work address and email address of the contact, among other information. The other modules 286 can include a configuration module (not shown) as well as other modules that can be used in conjunction with a SIM/RUIM interface 276 (described below).

The PIM 284 has functionality for organizing and managing data items of interest to a subscriber, such as, but not limited to, e-mail, calendar events, voice mails, appointments, and task items. In some cases, the PIM 284 may also include the functionality of the address book 282. The PIM application also has the ability to send and receive data items via the wireless network 400. PIM data items may be seamlessly integrated, synchronized, and updated via the wireless network 400 (or via the dataport 220 using a wired connection) with the mobile device subscriber's corresponding data items stored and/or associated with a host computer system. This functionality creates a mirrored host computer on the mobile device 100 with respect to such items. This can be particularly advantageous when the host computer system is the mobile device subscriber's office computer system.

Additional applications can also be loaded onto the server unit 205 through at least one of the wireless network 400, the auxiliary I/O subsystem 264, the data port 220, the server short-range communications subsystem 256, or any other suitable device subsystem 266. This flexibility in application installation increases the functionality of the mobile device 100 and can provide enhanced on-device functions, communication-related functions, or both. For example, secure communication applications can enable electronic commerce functions and other such financial transactions to be performed using the mobile device 100.

In order to send and receive communication signals over the wireless network 400, it is generally necessary to complete network registration or activation procedures. Network access is typically associated with a subscriber or user of the mobile device 100. To identify a subscriber, the server unit 205 may require that a SIM/RUIM card 274 (i.e. Subscriber Identity Module or a Removable User Identity Module) be inserted into a SIM/RUIM interface 276 before communicating with a network. Accordingly, the SIM/RUIM card 274 and the SIM/RUIM interface 276 are entirely optional.

The SIM/RUIM card 274 is one type of a conventional "smart card" that can be used to identify a subscriber of the mobile device 100 and to personalize the mobile device 100, among other things. Without the SIM/RUIM card 274, the mobile device 100 is not fully operational for communication with the wireless network 400. By inserting the SIM/RUIM card 274 into the SIM/RUIM interface 276, a subscriber can access all subscribed services. Services can include: web browsing and messaging such as e-mail, voice mail, Short Message Service (SMS), and Multimedia Messaging Services (MMS). More advanced services can include: point of sale, field service and sales force automation. The SIM/RUIM card 274 typically includes a processor and memory for storing information. Once the SIM/RUIM card 274 is inserted into the SIM/RUIM interface 276, it is coupled to the main processor 250. In order to identify the subscriber, the SIM/RUIM card 274 contains some user parameters such as an International Mobile Subscriber Identity (IMSI). An advantage of using the SIM/RUIM card 274 is that a subscriber is not necessarily bound by any single physical mobile device. The SIM/RUIM card 274 may store additional subscriber information for a mobile device as well, including datebook (or calendar) information and recent call information. Alternatively, user identification information can also be programmed into the flash memory 260 or the like.

As shown in FIG. 5, the UI unit 300 includes the display screen 310, keyboard 315, UI battery pack 320, UI contacts 325, track wheel 330, speaker 335 and microphone 340 of FIG. 3B. The UI unit 300 also includes a UI processor 350 that is connected with the above elements as well as with a UI short-range communication subsystem 352 for communication with the server unit 205, a battery interface 353, a flash memory 354, RAM 356 as well as a UI connector 360. The flash memory 354 and RAM 356 are for storage of UI programs 358 as well as data related to communications between the server unit 205 and the UI unit 300. The UI unit 300 may also include other user interface related components (not shown), such as a touch sensitive screen, camera, LED indicator lights, infrared, fingerprint detector, or a roller wheel with dynamic button pressing capability or the like. The type and number of input/output components on the UI unit 300 may depend on the application for which the UI unit 300 is intended. Generally speaking, the UI unit 300 should include fewer input/output components so that the UI unit 300 is of an appropriate size/weight for easier manipulation by the user. In the case of a handheld PDA/phone combination, the UI unit 300 is preferably as light as possible and having a size that is convenient for holding in a user's hand.

The display screen 310, keyboard 315, track wheel 330, speaker 335 and microphone 340 are standard components as will be known to one of skill in the art and can be substituted with various related types of input/output devices accordingly.

The UI processor 350 controls the operation of the components and subsystems of the UI unit 300. The UI processor 350 executes a UI operating system from flash memory 354, using RAM 356 for additional or temporary storage. The UI operating system is designed to interface with the main processor 250 via the UI short-range communication subsystem 352 to present information to and receive information from a user through the various input/output components on the UI unit 300. The division of responsibilities between the UI processor 350 and the main processor 250 can be varied depending on the requirements for the mobile device 100. In particular, the UI unit 300 is preferably a thin client (requiring lower processing power) and includes preloaded themes that correspond to themes available on the server unit 205 to provide efficient, higher speed communications between the UI processor 350 and the main processor 250 in the server unit 205.

It will be understood that the short-range wireless communications between the server unit 205 and the UI unit 300 are preferably carried out on a secure communications channel in order to protect privacy and protect against interception of communications by outside parties (hackers) or the like. In order to establish a secure channel, the server unit 205 and UI unit 300 can be paired (i.e. are set with compatible encryption keys), for example, during the manufacturing process so that the server unit 205 and UI unit 300 are immediately ready to use for secure communications. Alternatively, the server unit 205 and UI unit 300 can be configured to only allow pairing (i.e. exchange key or keys) over a wired connection, for example, when the UI unit 300 is placed in the engagement portion 215 of the server component 200. These arrangements allow for a more secure key exchange and allows for proprietary encryption systems and methods to be used to lessen the chance of the encryption being broken. A proprietary protocol could be based, for example, on a standard Bluetooth headset profile (for voice communications) and a standard serial port profile (for data communications).

It is also preferable if other devices/accessories are also pre-paired at the factory or connectable through a wired connection for pairing with the components of the mobile device 100. Similar to the UI unit 300, these devices/accessories may also be provided with predefined thin clients and themes related to the server unit 205. Examples of additional devices/accessories that could be paired with the mobile device 100 include a keyboard, an office PC, a home PC, office phone, laptop, car hands free system, etc. Alternatively, thin clients and themes for these devices could be downloaded via a secure wired connection.

In use of the mobile device 100, a received signal such as a text message, an e-mail message, or web page download will be processed by the communication subsystem 254 of the server unit 205 and input to the main processor 250. The main processor 250 will then process the received signal for output to the UI unit 300 via the server short-range communications subsystem 256. The UI unit 300 will then receive the signal on the UI short-range communications subsystem 352 and output the received information to the display 310 and/or speaker 335 and/or another appropriate output device. A subscriber can also compose data items, such as e-mail messages on the UI unit 300, for example, using the keyboard 315 in conjunction with the display 310 or other appropriate input devices. The UI unit 300 then sends the composed item to the server unit 205 via the UI short-range communication subsystem 352 and the server unit 205 transmits to the wireless network 400 via the communication subsystem 254.

For voice communications, the overall operation of the mobile device 100 is substantially similar, except that the received signals are received by the server unit 205, transmitted to the UI unit 300 and then output by UI unit 300 through the speaker 335. Transmitted signals are generated by the microphone 340 and sent from the UI unit 300 to the server unit 205 for retransmission to the wireless network 400. Alternative voice or audio I/O subsystems, such as a voice message recording subsystem, can also be implemented on the server unit 205. As will be known to one of skill in the art, although voice or audio signal output is accomplished primarily through the speaker 335, the display 310 can also be used to provide additional information such as the identity of a calling party, duration of a voice call, or other voice call related information.

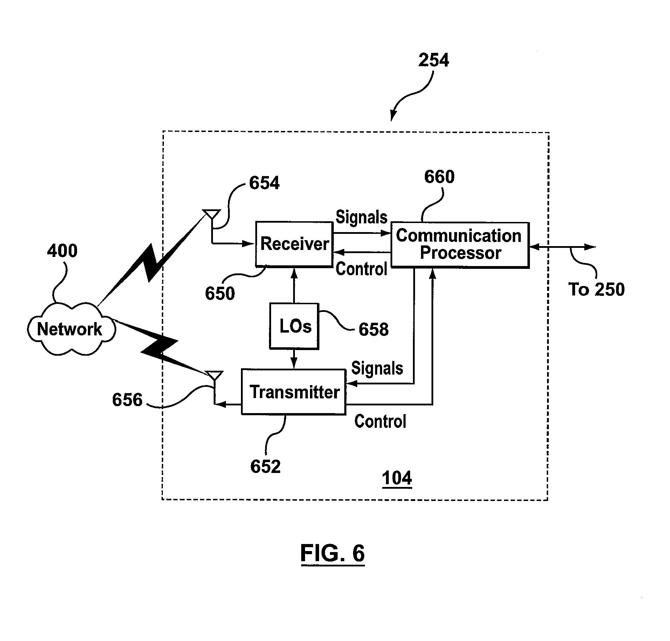

FIG. 6 is a block diagram of a typical communication subsystem used in the exemplary embodiments, using the communication subsystem 254 as an example. It will be understood by one of skill in the art that the server and UI short-range communication subsystems 256 and 352 will have similar components that have been adjusted to suit the shorter-range, lower-power requirements of the communications. The particular design of communication subsystem 254 is also dependent upon the network 400 in which mobile device 100 is intended to operate, thus it should be understood that the design illustrated in FIG. 6 serves only as one example. As shown in FIG. 6, the communication subsystem 254 includes a receiver 650, a transmitter 652, one or more embedded or internal antenna elements 654, 656, Local Oscillators (LOs) 658, and a processing module such as a Digital Signal Processor (DSP) 660.

Signals received by antenna 654 through network 400 are input to receiver 650, which may perform such common receiver functions as signal amplification, frequency down conversion, filtering, channel selection, and analog-to-digital (A/D) conversion. A/D conversion of a received signal allows more complex communication functions such as demodulation and decoding to be performed in DSP 660. In a similar manner, signals to be transmitted are processed, including modulation and encoding, by DSP 660. These DSP-processed signals are input to transmitter 652 for digital-to-analog (D/A) conversion, frequency up conversion, filtering, amplification and transmission over network 400 via antenna 656. DSP 660 not only processes communication signals, but also provides for receiver and transmitter control. For example, the gains applied to communication signals in receiver 650 and transmitter 652 may be adaptively controlled through automatic gain control algorithms implemented in DSP 660.

The wireless link between mobile device 100 and a network 400 may contain one or more different channels, typically different RF channels, and associated protocols used between mobile device 100 and network 400. A RF channel is a limited resource that must generally be conserved, typically due to limits in overall bandwidth and limited battery power of mobile device 100. As such, when mobile device 100 is fully operational, transmitter 652 is typically keyed or turned on only when it is sending to network 400 and is otherwise turned off to conserve resources. Similarly, receiver 650 is periodically turned off to conserve power until it is needed to receive signals or information (if at all) during designated time periods.

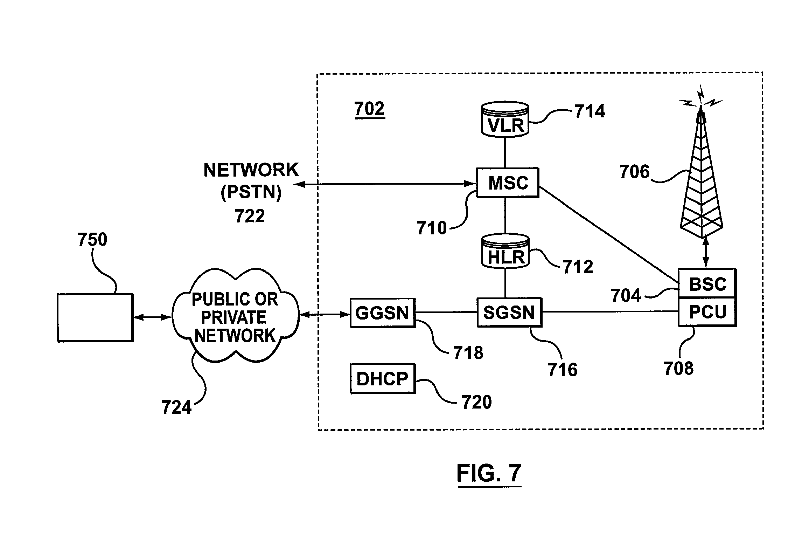

Referring now to FIG. 7, a block diagram of a node of a wireless network is shown as 702. In practice, network 400 comprises one or more nodes 702. Mobile device 100 communicates with a node 702 within wireless network 400. In the example implementation of FIG. 7, node 702 is configured in accordance with General Packet Radio Service (GPRS) and Global Systems for Mobile (GSM) technologies. Node 702 includes a base station controller (BSC) 704 with an associated tower station 706, a Packet Control Unit (PCU) 708 added for GPRS support in GSM, a Mobile Switching Center (MSC) 710, a Home Location Register (HLR) 712, a Visitor Location Registry (VLR) 714, a Serving GPRS Support Node (SGSN) 716, a Gateway GPRS Support Node (GGSN) 718, and a Dynamic Host Configuration Protocol (DHCP) 720. This list of components is not meant to be an exhaustive list of the components of every node 702 within a GSM/GPRS network, but rather a list of components that are commonly used in communications through network 400.

Although the wireless network 400 associated with the mobile device 100 is a GSM/GPRS wireless network in some implementations, other wireless networks can also be associated with the mobile device 100 in other implementations. The different types of wireless networks that can be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, iDEN networks, GSM/GPRS networks (as mentioned above), and future third-generation (3G) networks like EDGE and UMTS. Some other examples of data-centric networks include WiFi 802.11, Mobitex^{™} and DataTAC^{™} network communication systems. Examples of other voice-centric data networks include Personal Communication Systems (PCS) networks like GSM and Time Division Multiple Access (TDMA) systems.

In a GSM network, MSC 710 is coupled to BSC 704 and to a landline network, such as a Public Switched Telephone Network (PSTN) 722 to satisfy circuit switched requirements. The connection through PCU 708, SGSN 716 and GGSN 718 to the public or private network (Internet) 724 (also referred to herein generally as a shared network infrastructure) represents the data path for GPRS capable mobile devices. The public or private network 724 may then be further connected to other computing devices 750. In a GSM network extended with GPRS capabilities, BSC 704 also contains a Packet Control Unit (PCU) 708 that connects to SGSN 716 to control segmentation, radio channel allocation and to satisfy packet switched requirements. To track mobile device location and availability for both circuit switched and packet switched management, HLR 712 is shared between MSC 710 and SGSN 716. Access to VLR 714 is controlled by MSC 710.

Station 706 is a fixed transceiver station. Station 706 and BSC 704 together form the fixed transceiver equipment. The fixed transceiver equipment provides wireless network coverage for a particular coverage area commonly referred to as a "cell". The fixed transceiver equipment transmits communication signals to and receives communication signals from mobile devices within its cell via station 706. The fixed transceiver equipment normally performs such functions as modulation and possibly encoding and/or encryption of signals to be transmitted to the mobile device in accordance with particular, usually predetermined, communication protocols and parameters, under control of its controller. The fixed transceiver equipment similarly demodulates and possibly decodes and decrypts, if necessary, any communication signals received from mobile device 100 within its cell. Communication protocols and parameters may vary between different nodes. For example, one node may employ a different modulation scheme and operate at different frequencies than other nodes.

For all mobile devices 100 registered with a specific network, permanent configuration data such as a user profile is stored in HLR 712. HLR 712 also contains location information for each registered mobile device and can be queried to determine the current location of a mobile device. MSC 710 is responsible for a group of location areas and stores the data of the mobile devices currently in its area of responsibility in VLR 714. Further VLR 714 also contains information on mobile devices that are visiting other networks. The information in VLR 714 includes part of the permanent mobile device data transmitted from HLR 712 to VLR 714 for faster access. By moving additional information from a remote HLR 712 node to VLR 714, the amount of traffic between these nodes can be reduced so that voice and data services can be provided with faster response times and at the same time requiring less use of computing resources.

SGSN 716 and GGSN 718 are elements added for GPRS support; namely packet switched data support, within GSM. SGSN 716 and MSC 710 have similar responsibilities within wireless network 400 by keeping track of the location of each mobile device 100. SGSN 716 also performs security functions and access control for data traffic on network 400. GGSN 718 provides internetworking connections with external packet switched networks and connects to one or more SGSN's 716 via an Internet Protocol (IP) backbone network operated within the network 400. During normal operations, a given mobile device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring a DHCP server 720 connected to the GGSN 718. There are many mechanisms for dynamic IP assignment, including using a combination of a Remote Authentication Dial-In User Service (RADIUS) server and DHCP server. Once the GPRS Attach is complete, a logical connection is established from a mobile device 100, through PCU 708, and SGSN 716 to an Access Point Node (APN) within GGSN 718. The APN represents a logical end of an IP tunnel that can either access direct Internet compatible services or private network connections. The APN also represents a security mechanism for network 400, insofar as each mobile device 100 must be assigned to one or more APNs and mobile devices 100 cannot exchange data without first performing a GPRS Attach to an APN that it has been authorized to use. The APN may be considered to be similar to an Internet domain name such as "myconnection.wireless.com".

Once the GPRS Attach is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 400.
To maximize use of the PDP Contexts, network 400 will run an idle timer for each PDP Context to determine if there is a lack of activity. When a mobile device 100 is not using its PDP Context, the PDP Context can be deallocated and the IP address returned to the IP address pool managed by DHCP server 720.

The embodiments of a component-based mobile device described herein have several benefits. For example, since the server unit can be carried on a user's belt or in a handbag or the like, the weight of the server unit is less important and a larger, more powerful (heavier) battery can be provided. At the same time, the user will have easy access to the lighter weight UI unit that can be easily held in the hand. Even though the UI unit has a smaller (lighter) battery, the UI battery will be less likely to run out of power because it can be recharged by the server component. Another advantage of having the server unit separate from the UI unit is that the main communication functions, which produce more powerful radiation, will not be as close to the brain. Further, if the user carries the server unit in a bag (for laptop, etc), suitcase, or strapped to an ankle or the like, the more powerful radiation can also be kept away from other body parts that may be sensitive. If the server unit and the UI unit are pre-paired during manufacturing or before delivery to a user, or alternatively, can only be paired through a wireless connection, there will be improved wireless security as compared with systems that allow pairing over wireless channels using public protocols or the like.

It should be understood that various modifications can be made to the exemplary embodiments described and illustrated herein without departing from the general scope of the appended claims. It should also be understood that while the embodiments have been described for a server unit and a handheld UI unit, the embodiments are generally applicable to other server/user interface component combinations.

## Claims

1. A component-based mobile device comprising:
a server component comprising a server unit for performing voice and data communication functions, and an engagement portion; and
a physically separate user interface (UI) unit for performing input/output functions, which is in communication with the server unit and configured to releasably engage with the engagement portion.

2. The component-based mobile device of claim 1, wherein the server component further comprises a server battery and the UI unit further comprises a UI battery and the mobile device is configured such that the server battery charges the UI battery when the UI unit is in the engagement portion.

3. A component-based mobile device comprising:
a server component comprising a server battery and an engagement portion; and
a physically separate user interface (UI) unit, which is configured to releasably engage with the engagement portion, comprising a UI battery,
wherein the server battery and the UI battery are configured such that the server battery charges the UI battery when the UI unit is in the engagement portion.

4. A component-based mobile device comprising:
a server component comprising:
a server unit for performing processing and communication functions;
a server battery connected with the server unit;
an engagement portion attached to at least one of the server unit and the server battery; and
a charging system connected to the server unit and the server battery; and
a user interface (UI) unit for performing input/output functions and that is in communication with the server unit and configured to releasably engage with the engagement portion, the UI unit comprising a UI battery,
wherein the charging system is arranged in relation to the engagement portion such that the UI battery is charged by the server battery when the UI unit is in the engagement portion.

5. The component-based mobile device of any one of claims 1 to 4, wherein the engagement portion comprises a holster into which the UI unit may be slidably inserted and removed.

6. The component-based mobile device of any one of claims 1 to 5, wherein the server unit further comprises a server communications subsystem and the UI unit comprises a UI communications subsystem and the server unit and the UI unit are in wireless communication via the server and UI communications subsystems.

7. The component-based mobile device of any one of claims 1 to 6, wherein the server unit and the UI unit are manufactured such that they are paired for encrypted wireless communications.

8. The component-based mobile device of any one of claims 1 to 7, wherein the server component further comprises a server connector and the UI unit further comprises a UI connector and the server unit and the UI unit are in wired communication via the server and UI connectors when the UI unit is in the engagement portion.

9. The component-based mobile device of claim 8, wherein the server unit and the UI unit are configured to only exchange encryption keys when in wired communication.

## Amended claims

### Amended claims in accordance with Rule 86(2) EPC.

**1.** A component-based mobile device (100) comprising:
a server component (200) comprising:
a server unit (205) for performing processing and communication functions;
a server battery (210) connected with the server unit;
an engagement portion (215) attached to at least one of the server unit (205) and the server battery (210); and
a charging system connected to the server unit and the server battery; and
a Ul unit (300) for performing input/output functions and that is in communication with the server unit (205) and configured to releasably engage with the engagement portion, the UI unit (300) comprising a Ul battery (320),
wherein the charging system is arranged in relation to the engagement portion such that the Ul battery (300) is charged by the server battery when (210) the Ul unit (300) is in the engagement portion (215), and
wherein the server unit (205) and the Ul unit (300) are manufactured such that they are paired for encrypted wireless communications.

**2.** The component-based mobile device of claim 1, wherein the engagement portion (215) comprises a holster into which the Ul unit (300) may be slidably inserted and removed.

**3.** The component-based mobile device of either of claims 1 or 2, wherein the server unit further comprises a server communications subsystem (254) and the Ul unit comprises a Ul communications subsystem (352) and the server unit (205) and the Ul unit (300) are configured to communicate wirelessly via the server and Ul communications subsystems (254, 352).

**4.** The component-based mobile device of any one of claims 1 to 3, wherein the server component further comprises a server connector (254) and the Ul unit further comprises a Ul connector (360) and the server unit (205) and the Ul unit (300) are in wired communication via the server and Ul connectors when the Ul unit is in the engagement portion.

**5.** The component-based mobile device of claim 4, wherein the server unit and the Ul unit are configured to only exchange encryption keys when in wired communication.

**6.** The component-based mobile device of any one of claims 1 to 5, wherein the Ul unit is foldable.

**7.** The device of any preceding claim having other devices manufactured so as to be paired for wireless communications with said component based mobile device.
